**Europäisches Patentamt**

(19) **European Patent Office**

**Office européen des brevets**

(11) Publication number: **0 057 222**
**B1**

# (12) EUROPEAN PATENT SPECIFICATION

(45) Date of publication of the patent specification:
**07.03.84**

(51) Int. Cl.³: **A 23 J 3/02, B 01 J 2/16**

(21) Application number: **81902277.3**

(22) Date of filing: **31.07.81**

(86) International application number:
**PCT/GB 81/00153**

(87) International publication number:
**WO 82/00404 (18.02.82 Gazette 82/6)**

(54) **PROCESS FOR MANUFACTURING CASEINATES.**

(30) Priority: **31.07.80 GB 8024992**

(43) Date of publication of application:
**11.08.82 Bulletin 82/32**

(45) Publication of the grant of the patent:
**07.03.84 Bulletin 84/10**

(84) Designated Contracting States:
**CH DE FR GB LI NL**

(56) References cited:
**DE - A - 1 445 647**
**FR - A - 1 573 957**
**FR - A - 2 338 741**
**GB - A - 1 400 413**

(73) Proprietor: **CLAUDIUS PETERS LIMITED, Abbey House Farnborough Road, Farnborough Hampshire CU14 7NA (GB)**

(72) Inventor: **CARTWRIGHT, William John, 17 Cottage Green Church Lane, HARTLEY, Wintney Hampshire (GB)**

(74) Representative: **Lewis, David Overington, c/o Babcock International plc Cleveland House 19 St. James's Square, London SW1Y 4LN (GB)**

Process for manufacturing caseinates

This invention relates to the manufacture of caseinates, and, more particularly to the manufacture of sodium caseinate.

Heretofore, sodium caseinate has been manufactured by mixing a slurry of casein in water with sodium hydroxide then spray drying the resultant sodium caseinate.

FR-A-2338 741 (claiming priority from German Patent Application No. 2 602 454) discloses a process and a device for treating a pulverous or granular substance, which device comprises a vessel, which vessel is provided with means for introducing the substance to be treated into the upper end of the vessel in a vertical flow, a first inlet for a substantially vertical downwardly flowing gas stream for entraining the substance, a plurality of nozzles for spraying the pulverous or granular substance with a liquid, molten or vapourous substance, a second inlet at the base of the vessel for a countercurrent stream of heated fluidising air, a first outlet for gas free from sprayed pulverous or granular substance, and a second outlet for the sprayed pulverous or granular substance, the height of the vessel being such as to enable the sprayed pulverous or granular substance to be conveyed downwardly over a path of pre-determined length.

It has now been found that a modified form of this device may be utilised to manufacture a caseinate.

According to the invention there is provided a method of manufacturing a caseinate including introducing casein in particulate form entrained in air into the upper end region of a cylindrical mixing vessel, spraying the casein particles with liquid, allowing the sprayed particles to fall over a downwardly extending path of predetermined length to a fluidised bed region at the base of the mixing vessel and subjecting the particles to a stream of heated air for a predetermined time in the fluidised bed region the heated air being used for fluidising the bed of particulates and discharging the sprayed particles from the bed and the mixing vessel and reacting the discharged sprayed particles with water to produce a solution of the caseinate characterized in that the caseinate is sodium caseinate and the method includes the steps of introducing casein having an average particle size in the range of 28 to $50 \times 10^{-6}$ m and all passing through a British Standard Specification sieve mesh 110 entrained in air into the upper end region of the vessel as a free falling cylindrical curtain, allowing the sprayed particles to fall as the free falling cylindrical curtain into a spray zone intermediate the upper end region of the vessel and the base of the vessel, the spray zone having a larger diameter to that of the upper end region of the mixing vessel, spraying the casein particles of the curtain in the spray zone with sodium hydroxide solution having a concentration of between 10 and 15% by weight through circumferentially spaced atomising nozzles giving a droplet size of between 60 and $100 \times 10^{-6}$ m, subjecting the sprayed particles to a stream of heated air at a temperature of approximately 80°C in the fluidised bed region for approximately one to three minutes, and reacting the discharged sprayed particles in water to produce sodium caseinate, the resulting solution of sodium caseinate having a pH value in the range 6 to 8.

The invention will now be described, by way of example, with reference to the accompanying diagrammatic drawing. As shown, a cylindrical mixing vessel 2 includes a domed upper region 4, a co-axial upper intermediate portion 6 of larger diameter than the region 4 extending downwardly as a skirt 5 into a lower intermediate portion 8 and a flat bottomed lower portion 10. a solid particle· discharge head 12 is positioned centrally of the domed upper region 4 to produce a cylindrical curtain of casein particles free falling under the effect of gravity. Circumferentially spaced nozzles 14 supplied with air from a circumferential wind box 16 and sodium hydroxide solution from a ring header 18 produce sprays of droplets which mix intimately with the particles in the free falling curtain. A diffuser plate 20 is positioned in the lower portion 10 and is supplied from below with air delivered to a plenum 22 through a duct 24. The air passes upwardly through the diffuser plate 20 to effect fluidisation of particles in a bed superjacent the diffuser plate 20. On passing through the bed the air flows upwardly, together with air supplied to the spray nozzles 14 which has been carried downwardly to the base of the skirt 5, through cylindrical space formed between the skirt 5 and the lower intermediate portion 8 to a filter collector 26 discharging through a duct 28. A stirrer 30 is positioned superjacent the diffuser plate 20 and a controlled discharge outlet 32 for particles is provided adjacent the diffuser plate 20.

In operation, casein powder entrained in an air stream at a temperature of approximately 50°C or lower and having an average particle size of $50 \times 10^{-6}$ m and all passing through a British Standard Specification sieve mesh 110 is discharged through the head 12 into the upper portion 4 of the mixing vessel 2 to form a free-falling cylindrical curtain. Air atomised sprays of 10% to 15% by weight sodium hydroxide solution droplets having a size range of between approximately 60 and $100 \times 10^{-6}$ m and a temperature of approximately 10°C are directed through nozzles 14 toward the curtain and with continued downward movement powder mixed with the sodium hydroxide droplets enters the fluidised bed formed superjacent the diffuser plate 20, fluidising air at about 80°C to effect drying being supplied through the duct 24. The motion of the fluidised bed is such that after about one to three minutes circulation, with stirring, in the fluidised bed, the particles move to discharge outlet 32 for discharge as a powder. Water vapour and air from the bed and upper region of the vessel are discharged through the filter collector 26 to the duct 28.

The product powder is a mixture of sodium caseinate, casein and sodium hydroxide which, when dissolved in water, gives a solution of sodium caseinate with a pH value in the range of between 6 and 8.

An average casein particle size smaller than 50 microns, for example of about $28 \times 10^{-6}$ m, may enhance the reaction but will, of course, require greater expenditure on grinding.

It should be appreciated that the spray nozzles 14 can be mounted so as to allow for alteration of the angle of declination and inclination of the nozzles and also to allow for alteration of the angular displacement of the spray nozzles from the centre of the mixing vessel.

Further it should also be appreciated that additional filter facilities can be provided to those of the filter collector 26. These additional filter facilities can be positioned adjacent to the mixing vessel so as to communicate with the fluidised bed region of the mixing vessel.

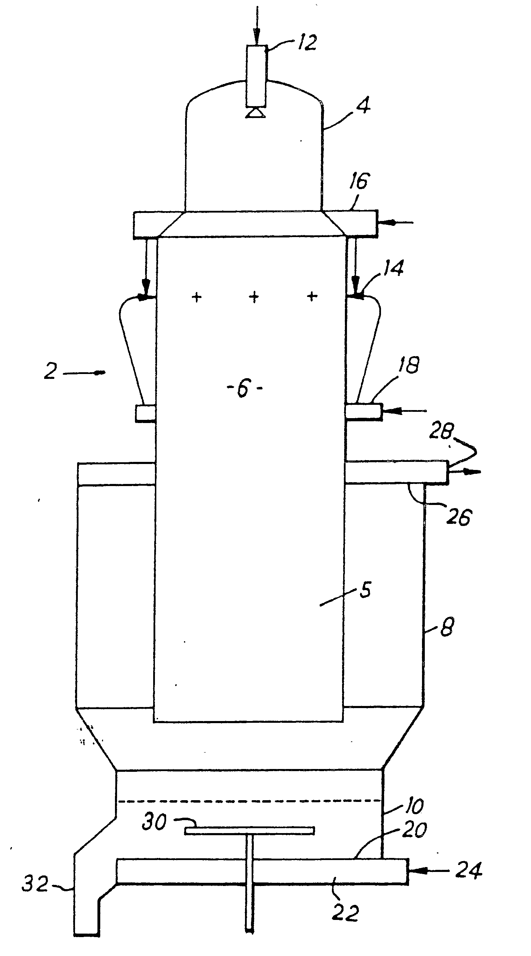

## Claim

1. A method of manufacturing a caseinate including introducing casein in particulate form entrained in air into the upper end region of a cylindrical mixing vessel, spraying the casein particles with liquid, allowing the sprayed particles to fall over a downwardly extending path of predetermined length to a fluidised bed region at the base of the mixing vessel and subjecting the particles to a stream of heated air for a predetermined time in the fluidised bed region the heated air being used for fluidising the bed of particles and discharging the sprayed particles from the bed and the mixing vessel and reacting the discharged sprayed particles with water to produce a solution of the caseinate characterized in that the caseinate is sodium caseinate and the method includes the steps of introducing casein having an average particle size in the range of 28 to $50 \times 10^{-6}$ m and all passing through a British Standard Specification sieve mesh 110 entrained in air into the upper end region of the vessel as a free falling cylindrical curtain, allowing the sprayed particles to fall as the free falling cylindrical curtain into a spray zone intermediate the upper end region of the vessel and the base of the vessel, the spray zone having a larger diameter to that of the upper end region of the mixing vessel, spraying the casein particles of the curtain in the spray zone with sodium hydroxide solution having a concentration of between 10 and 15% by weight through circumferentially spaced atomising nozzles giving droplet size of between 60 and $100 \times 10^{-6}$ m, subjecting the sprayed particles to a stream of heated air at a temperature of approximately 80°C in the fluidised bed region for approximately one to three minutes, and reacting the discharged sprayed particles in water to produce sodium caseinate, the resulting solution of sodium caseinate having a pH value in the range 6 to 8.

## Patentanspruch

Verfahren zur Herstellung von Caseinat mit folgenden Massnahmen:
Casein in verteilter Form und durch Luft gefördert wird in den oberen Endbereich eines zylindrischen Mischgefässes eingeführt; die Caseinpartikel werden mit Flüssigkeit gesprüht; die gesprühten Partikel können über einen sich nach unten erstreckenden Weg vorbestimmter Länge am Grund des Mischgefässes in einen als fluidisiertes Bett ausgebildeten Bereich fallen; die Partikel werden einem Strom erhitzter Luft während einer bestimmten Zeit im Bereich des fluidisierten Bettes ausgesetzt; die erhitzte Luft wird zur Fluidisierung des Bettes der Partikel und zum Austragen der gesprühten Partikel aus dem Bett und dem Mischgefäss benutzt; die ausgetragenen, gesprühten Partikel werden mit Wasser reagieren lassen, um eine Lösung des Caseinats zu erhalten, dadurch gekennzeichnet, dass das Caseinat aus Natriumcaseinat besteht und dass das Verfahren folgende Schritte umfasst: das Casein hat eine mittlere Partikelgrösse im Bereich von 28 bis $50. 10^{-6}$ m und passiert ganz durch ein Sieb der britischen Standardspezifikation Mesh 110 und wird in Luft mitgeführt in das obere Ende des Gefässes als ein frei fallender zylindrischer Vorhang eingeführt; die gesprühten Partikel können als der freifallende zylindrische Vorhang in eine Sprühzone zwischen dem oberen Endbereich des Gefässes und dem Boden des Gefässes fallen, wobei die Sprühzone einen grösseren Durchmesser gegenüber dem oberen Endbereich des Mischgefässes aufweist; die Caseinpartikel des Vorhangs in der Sprühzone werden mit Natriumhydroxidlösung in einer Konzentration zwischen 10 und 15 Gewichtsprozent über Sprühdüsen besprüht, die am Umfang verteilt angeordnet sind und Tröpfchengrössen zwischen 60 und $100. 10^{-6}$ m erzeugen; die besprühten Partikel werden einem Strom erhitzter Luft bei einer Temperatur von ungefähr 80°C in dem Bereich des fluidisierten Bettes während ungefähr 1 bis 3 min ausgesetzt; die ausgetragenen besprühten Partikel reagieren in Wasser zur Erzeugung von Natriumcaseinat, wobei die erhaltene Lösung an Natriumcaseinat einen pH-Wert im Bereich von 6 bis 8 aufweist.

## Revendication

Un procédé de fabrication d'un caséinate qui consiste à introduire de la caséine sous une forme particulaire entraînée dans l'air dans la région de l'extrémité supérieure d'un récipient de mélange cylindrique, pulvériser les particules de caséine avec un liquide en laissant les particules pulvérisées tomber sur un trajet s'étendant vers le bas de longueur prédéterminée vers une région à lit fluidisé à la base du récipient de mélange et soumettre les particules à l'action d'un courant d'air chauffé pendant une durée prédéterminée dans la région à lit fluidisé, l'air chauffé étant employé pour fluidiser le lit de particules et pour évacuer les particules pulvérisées du lit et du récipient de mélange, et faire réagir les particules pulvérisées évacuées avec de l'eau pour produire une solution du caséinate, caractérise en ce que le caséinate est le caséinate de sodium et le procédé comprend les stades d'introduction de caséine ayant une taille moyenne des particules dans la gamme de 28 à 50 x 10$^{-6}$ m et passant en totalité à travers un tamis de 110 mesh de la série British Standard Specification, entraînée dans l'air dans la région de l'extrémité supérieure du récipient sous forme d'un rideau cylindrique tombant librement dans une zone de pulvérisation intermédiaire entre la région de l'extrémité supérieure du récipient et la base du récipient, la zone de pulvérisation ayant un diamètre supérieur à celui de la région de l'extrémité supérieure du récipient de mélange, pulvérisation des particules de caséine du rideau dans la zone de pulvérisation avec une solution d'hydroxyde de sodium ayant une concentration entre 10 et 15% en poids à travers des buses d'atomisation espacées circonférentiellement produisant une taille des gouttelettes entre 60 et 100 x 10$^{-6}$m, action d'un courant d'air chauffé à une température d'environ 80°C sur les particules pulvérisées dans la région à lit fluidisé pendant environ 1 à 3 minutes et réaction des particules pulvérisées évacuées, dans de l'eau pour produire le caséinate de sodium, la solution obtenue de caséinate de sodium ayant un pH dans la gamme de 6 à 8.